(19) Europäisches Patentamt
European Patent Office
Office européen des brevets

(11) **EP 4 538 242 A1**

(12) **EUROPEAN PATENT APPLICATION**
published in accordance with Art. 153(4) EPC

(43) Date of publication:
**16.04.2025 Bulletin 2025/16**

(21) Application number: **23842146.5**

(22) Date of filing: **10.07.2023**

(51) International Patent Classification (IPC):
*C03C 10/12* (2006.01)     *C03B 32/02* (2006.01)

(52) Cooperative Patent Classification (CPC):
**C03B 32/02; C03C 10/00; C03C 21/00**

(86) International application number:
**PCT/CN2023/106512**

(87) International publication number:
**WO 2024/017081 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.07.2022 CN 202210869861**

(71) Applicants:
• **Chongqing Aureavia Hi-Tech Glass Co., Ltd.**
**Chongqing 400714 (CN)**
• **Huawei Technologies Co., Ltd.**
**Shenzhen, Guangdong 518129 (CN)**

(72) Inventors:
• **HUANG, Hao**
**Chongqing 400714 (CN)**
• **TIAN, Qian**
**Chongqing 400714 (CN)**
• **LU, Guangyu**
**Chongqing 400714 (CN)**
• **ZHOU, Jingpeng**
**Chongqing 400714 (CN)**
• **CHEN, Jiejie**
**Shenzhen, Guangdong 518129 (CN)**
• **ZHU, Guangxiang**
**Shenzhen, Guangdong 518129 (CN)**

(74) Representative: **Staeger & Sperling**
**Partnerschaftsgesellschaft mbB**
**Sonnenstraße 19**
**80331 München (DE)**

(54) **GLASS-CERAMIC HAVING EXCELLENT ACID AND ALKALI RESISTANCE, AND PREPARATION METHOD THEREFOR AND USE THEREOF**

(57)     Glass-ceramic having excellent acid and alkali resistance, and a preparation method therefor and use thereof are provided. The glass-ceramic comprises the following components in molar percentage based on the total number of moles of the components of the glass-ceramic: $67.0\% \leq SiO_2 \leq 71.0\%$; $3.5\% \leq Al_2O_3 \leq 4.5\%$; $0.7\% \leq P_2O_5 \leq 1.5\%$; $1.5\% \leq ZrO_2 \leq 4.0\%$; $0\% < Na_2O \leq 1.0\%$; $0\% < K_2O \leq 0.5\%$; $20.0\% \leq Li_2O \leq 23.0\%$; $0\% < CaO \leq 1.8\%$; $0\% < B_2O_3 \leq 0.7\%$; $0\% \leq MgO \leq 1.0\%$; and $0\% \leq BaO \leq 0.8\%$. After the glass-ceramic is enabled to stand in a hydrochloric acid solution, a hydrofluoric acid solution, and/or a sodium hydroxide solution, the rate of weight loss per unit area of the glass-ceramic is very low, the acid and alkali resistance is excellent, the strength after strengthening is excellent, and the tensile stress linear density CT_LD reaches 45,000 MPa/mm to 64,000 MPa/mm.

FIG. 1

**Description**

**RELATED APPLICATION**

This application claims priority to prior application document No. CN202210869861.8 filed before the China National Intellectual Property Administration on July 22, 2022, which is incorporated herein in its entirety.

**TECHNICAL FIELD**

The present application relates to glass-ceramics and articles, and more specifically, to lithium-aluminosilicate glass-ceramic compositions and articles having high acid and alkali resistance properties.

**BACKGROUND**

With the continuous development and progress of intelligent electronic products, the requirements for a cover glass thereof used for display technology are also improving. During the processing of glass-ceramic, it is necessary to ensure that the corrosion of acid and alkali cleaning on a glass will not have an affect on the optics, strength, and subsequent processing of the glass, and at the same time, to meet the use of electronic products in an acidic and alkaline environment, such as hand-held sweating and so on. In a prior art, in order to ensure the strength of glass, and drop resistance and impact resistance of glass, it is usually needed to subject a glass-ceramic to chemical strengthening treatment. In the strengthening process, small ions (such as $Li^+$, $Na^+$) in the surface layer of glass-ceramic exchange with large ions ($Na^+$, $K^+$) in a salt bath, and the surface layer of the glass is more susceptible to acid and alkali etching and other damages due to its rich sodium ions.

To address this problem, the prior art usually improves the chemical durability of glass-ceramic from a process perspective by reducing the $Na^+$ concentration on the glass surface. For example, application No. CN202110739360.3 provides a strengthening method in which primary strengthening is first carried out in a 100 wt% sodium salt (e.g., sodium nitrate) salt bath, lithium ions in the glass-ceramic are exchanged by using sodium ions, then the primary-strengthened glass-ceramic is placed in a secondary-strengthening salt bath comprising lithium salts, and a potassium salts (e.g., potassium nitrate) salt baths having a certain amount of lithium ions to carry out the secondary-strengthening, in order to reduce the sodium ion component on the surface of the strengthened glass-ceramic. Then, for example, application No. CN201980020541.1 provides a relationship among a range of ion exchange depth of a glass ceramic after chemical strengthening, the maximum compressive stress on the surface and the maximum central tension, and the concentration of $Na_2O$ at the outer surface of the glass ceramic article is less than 10 mol%, and so on.

**SUMMARY**

The method used in the prior art to improve the chemical durability of the glass-ceramic does not have an outstanding effect on the improvement of chemical durability, and it will essentially aggravate the number of strengthening processes and increase the cost. On the other hand, it will lose a certain amount of the strengthening effect, which will have a negative effect on the properties of the glass-ceramic, such as the monolithic strength, the drop resistance, and so on.

In order to improve the environmental durability or chemical durability of the glass-ceramic, starting from the purpose of improving the acid and alkali resistance of the glass-ceramic, the present application strictly controls the range of the oxide components, and the content relationship between the oxides in the lithium-aluminum-silicate system of the glass-ceramic, such as: the amounts of $B_2O_3$, $Na_2O$ and $P_2O_5$ are simultaneously controlled in order to improve the smelting effect and the adverse effect on the optics brought about by the excessive crystal grain size after the crystallization treatment; the ratio of alkali metals and alkaline earth metals is set under a specific crystallinity, etc., and a glass-ceramic having excellent acid and alkali resistance is obtained. The national standard document used for the acid and alkali resistance test is: GB/T 32644-2016, Test Method for Chemical Durability of Flat Panel Display Base glass.

In order to solve the above existing technical problems, the present application provides the following technical solutions:

1. An acid and alkali resistant glass-ceramic comprising the following components in molar percentage based on the total number of moles of the components of the glass-ceramic:

$$67.0\% \leq SiO_2 \leq 71.0\%;$$

$$3.5\% \leq Al_2O_3 \leq 4.5\%;$$

$$0.7\% \leq P_2O_5 \leq 1.5\%;$$

$$1.5\% \leq ZrO_2 \leq 4.0\%;$$

$$0\% < Na_2O \leq 1.0\%;$$

$$0\% < K_2O \leq 0.5\%;$$

$$20.0\% \leq Li_2O \leq 23.0\%;$$

$$0\% < CaO \leq 1.8\%;$$

$$0\% < B_2O_3 \leq 0.7\%;$$

$$0\% \leq MgO \leq 1.0\%;$$

and

$$0\% \leq BaO \leq 0.8\%.$$

2. The glass-ceramic according to technical solution 1, wherein the component content of the glass-ceramic satisfies the following conditions:

$10 \geq (Na_2O + K_2O + Li_2O)/ZrO_2 \geq 0.2$, preferably $10 \geq (Na_2O + K_2O + Li_2O)/ZrO_2 \geq 5$; and/or
$CaO + BaO + Mg02:1.5x(Na_2O + K_2O)$; and/or
$ZrO_2 + P_2O_5 \geq 7.6 \times B_2O_3$.

3. The glass-ceramic according to technical solution 1 or 2, wherein, in molar percentage based on the total number of moles of the components of the glass-ceramic, $1.0\% \leq P_2O_3 \leq 1.5\%$, and/or $2.0\% \leq ZrO_2 < 3.0\%$, and/or $0\% < CaO \leq 1.5\%$.

4. The glass-ceramic according to any one of technical solutions 1 to 3, wherein the glass-ceramic comprises the following components in molar percentage based on the total number of moles of the components of the glass-ceramic:

$$68.0\% \leq SiO_2 \leq 69.5\%;$$

$$3.8\% \leq Al_2O_3 \leq 4.3\%;$$

$$1.0\% \leq P_2O_5 \leq 1.5\%;$$

$$2.5\% \leq ZrO_2 \leq 3.0\%;$$

$$0.1\% \leq Na_2O \leq 1.0\%;$$

$$0.1\% \leq K_2O \leq 0.3\%;$$

$$20.5\% \leq Li_2O \leq 21.5\%;$$

$$0.5\% \leq CaO \leq 1.5\%;$$

$$0.1\% \leq B_2O_3 \leq 0.4\%;$$

$$0\% \leq MgO \leq 1.0\%;$$

and

$$0\% \leq BaO \leq 0.8\%.$$

5. The glass-ceramic according to any one of technical solutions 1 to 4, wherein, in molar percentage based on the total number of moles of the components of the glass-ceramic, in the glass-ceramic:

$SiO_2/(Li_2O+Al_2O_3)$ has a value of 2.5 to 3.0; and/or
$(CaO+BaO+MgO)/ZrO_2$ has a value of 0.2 to 0.7.

6. The glass-ceramic according to any one of technical solutions 1 to 5, wherein the glass-ceramic comprises a crystal phase, and a main crystalline phase of the crystal phase is a lithium disilicate crystalline phase and a petalite crystalline phase.

7. The glass-ceramic according to technical solution 6, wherein the crystal phase constitutes at least 80.00 wt% of the glass-ceramic.

8. The glass-ceramic according to technical solution 6 or 7, wherein, in the glass-ceramic, an average size of crystal grains is 10 nm to 50 nm, preferably 10 nm to 30 nm.

9. The glass-ceramic according to any one of technical solutions 1 to 8, wherein, at a thickness of 0.7 mm, the glass-ceramic is transparent and has a transmittance of not less than 90.00% for light at a wavelength of 550 nm.

10. The glass-ceramic according to any one of technical solutions 1 to 9, wherein an unstrengthened glass-ceramic is used to put in:

a hydrochloric acid solution with a mass concentration of 5% and left standing therein at 95°C for 24 h, and the glass-ceramic has a weight loss rate per unit area x1, $x1 < 0.050$ $g/cm^2$; and/or
a hydrofluoric acid solution with a mass concentration of 10% and left standing therein at 20°C for 20 min, and the glass-ceramic has a weight loss rate per unit area x2, $x2 \leq 8.00$ $g/cm^2$; and/or
a sodium hydroxide solution with a mass concentration of 5% and left standing therein at 95°C for 6 h, and the glass-ceramic has a weight loss rate per unit area x3, $x3 \leq 0.20$ $g/cm^2$.

11. The glass-ceramic according to any one of technical solutions 1 to 10, wherein the glass-ceramic comprises a compressive stress layer formed by ion exchange, and a depth of the compressive stress layer DOL_0 on any surface of the glass-ceramic is 15% to 25% of the thickness of the glass-ceramic.

12. The glass-ceramic according to technical solution 11, wherein the glass-ceramic has a tensile stress linear density CT_LD of 45,000 MPa/mm to 64,000 MPa/mm.

13. The glass-ceramic according to technical solution 11 or 12, wherein the glass-ceramic has a surface compressive stress of 350 MPa to 500 MPa.

14. The glass-ceramic according to any one of technical solutions 11 to 13, wherein the glass-ceramic has a |CT_AV| of 80 MPa to 110 MPa.

15. The glass-ceramic according to any one of technical solutions 11 to 14, wherein, left standing the glass-ceramic in a hydrochloric acid solution with a mass concentration of 5% at 95°C for 24 h, the glass-ceramic has a weight loss rate per unit area x4, $x4 < 0.150$ $g/cm^2$, preferably $x4 < 0.100$ $g/cm^2$; and/or

left standing the glass-ceramic in a hydrofluoric acid solution with a mass concentration of 10% at 20°C for 20 min, the glass-ceramic has a weight loss rate per unit area x5, $x5 \leq 8.50$ $g/cm^2$; and/or

left standing the glass-ceramic in a sodium hydroxide solution with a mass concentration of 5% at 95°C for 6 h, the glass-ceramic has a weight loss rate per unit area x6, x6<0.25 $g/cm^2$.

16. A preparation method of a glass-ceramic, comprising the following steps:

(1) preparation of a base glass: melting and molding a mixture of raw material substances and then annealing to obtain the base glass;
(2) preparation of a glass-ceramic brick: heating the base glass obtained in step (1) sequentially for nucleation treatment and crystallization treatment to obtain the glass-ceramic brick; and
(3) cold processing: subjecting the glass-ceramic brick obtained in step (2) to cold processing treatment to obtain a sample sheet of the glass-ceramic as described in any one of technical solutions 1 to 10.

Wherein, the cold processing may include slicing treatment, before the slicing treatment the glass-ceramic brick can be subjected to shape-correction treatment, after the slicing treatment, CNC treatment, grinding treatment, and polishing treatment can be carried out in turn, or after the slicing treatment, at least one method selected from the group consisting of CNC treatment, grinding treatment, and polishing treatment is carried out for modification treatment of the glass sheet.

17. The preparation method according to technical solution 16, further comprising the following steps:
(4) subjecting the sample sheet of the glass-ceramic obtained in step (3) to chemical strengthening treatment to obtain a sample sheet of the glass-ceramic sample as described in any one of technical solutions 11 to 15.

18. The preparation method according to technical solution 16 or 17, wherein, in step (1), a melting temperature is 1500°C to 1650°C; and an annealing temperature is 450°C to 550°C.

19. The preparation method according to any one of technical solutions 16 to 18, wherein, in step (2), the nucleation treatment is carried out at 530°C to 565°C for 90 min to 240 min; and the crystallization treatment is carried out at 640°C to 700°C for 90 min to 240 min.

20. The preparation method according to any one of technical solutions 16 to 19, wherein, in step (2), the crystallization treatment is a semi-crystallization treatment, and after the semi-crystallization treatment makes a crystallization degree of the base glass reach 1/3 to 4/5 of a complete crystallization degree, a 3D hot bending treatment is carried out to obtain the glass-ceramic brick; preferably, the 3D hot bending treatment is a hot bending treatment of three stages: preheating at a temperature of 450°C to 720°C, hot bending at a temperature of 720°C to 820°C, and cooling to room temperature.

21. The preparation method according to any one of technical solutions 17 to 19, wherein, in step (4), the chemical strengthening treatment is carried out in a mixed salt bath comprising 30 wt% to 100 wt% of $NaNO_3$, preferably 30 wt% to 90wt% of $NaNO_3$, and/or 0 wt% to 70 wt% of $KNO_3$, preferably 10 wt% to 70 wt% of $KNO_3$, and $LiNO_3$ is added in a content of 0.01 wt% to 0.10 wt% relative to the total weight of the mixed salt bath.

22. The preparation method according to technical solution 17 or 21, wherein the chemical strengthening treatment is carried out with one or two or more ion exchanges such that the glass-ceramic has a tensile stress linear density CT_LD of 45,000 MPa/mm to 64,000 MPa/mm.

23. A glass-ceramic obtained by the preparation method according to any one of technical solutions 16 to 22.

24. Use of the glass-ceramic according to any one of technical solutions 1 to 15 or the glass-ceramic according to technical solution 23 as a display panel or a display screen in an intelligent electronic product.

25. Use of the glass-ceramic according to any one of technical solutions 1 to 15 or the glass-ceramic according to technical solution 23 in a glass device.

A technical solution of the above technical solutions has the following advantages or beneficial effects: the glass-ceramic provided by the present application or the glass-ceramic obtained by the preparation method of the present application has an excellent acid and alkali resistance, and at the same time has an excellent strength and light transmittance.

The present application uses an unstrengthened glass-ceramic to be put in:

a hydrochloric acid solution with a mass concentration of 5% and left standing therein at 95°C for 24 h, and the glass-ceramic has a weight loss rate per unit area x1, x1<0.050 $g/cm^2$; and/or
a hydrofluoric acid solution with a mass concentration of 10% and left standing therein at 20°C for 20 min, and the glass-ceramic has a weight loss rate per unit area x2, x2≤8.00 $g/cm^2$; and/or
a sodium hydroxide solution with a mass concentration of 5% and left standing therein at 95°C for 6 h, and the glass-ceramic has a weight loss rate per unit area x3, x3≤0.20 $g/cm^2$.

The present application uses a chemically strengthened glass-ceramic to be put in:

a hydrochloric acid solution with a mass concentration of 5% and left standing therein at 95°C for 24 h, the glass-ceramic has a weight loss rate per unit area x4, $x4 < 0.150$ g/cm$^2$, preferably $x4 < 0.100$ g/cm$^2$; and/or
a hydrofluoric acid solution with a mass concentration of 10% and left standing therein at 20°C for 20 min, the glass-ceramic has a weight loss rate per unit area x5, $x5 \leq 8.50$ g/cm$^2$; and/or
a sodium hydroxide solution with a mass concentration of 5% and left standing therein at 95°C for 6 h, the glass-ceramic has a weight loss rate per unit area x6, $x6 < 0.25$ g/cm$^2$.

**BRIEF DESCRIPTION OF THE DRAWINGS**

FIG. 1 shows a light transmittance profile of a crystallized sheet of Example S1 with light having a wavelength of 200 nm to 1000 nm.
FIG. 2 shows profiles of weight loss per unit area of the crystallized sheets and strengthened sheets of Examples S1-S10 and Comparative Examples D1-D9 put in a hydrochloric acid solution with a mass concentration of 5% and left standing therein at 95°C for 24 h.

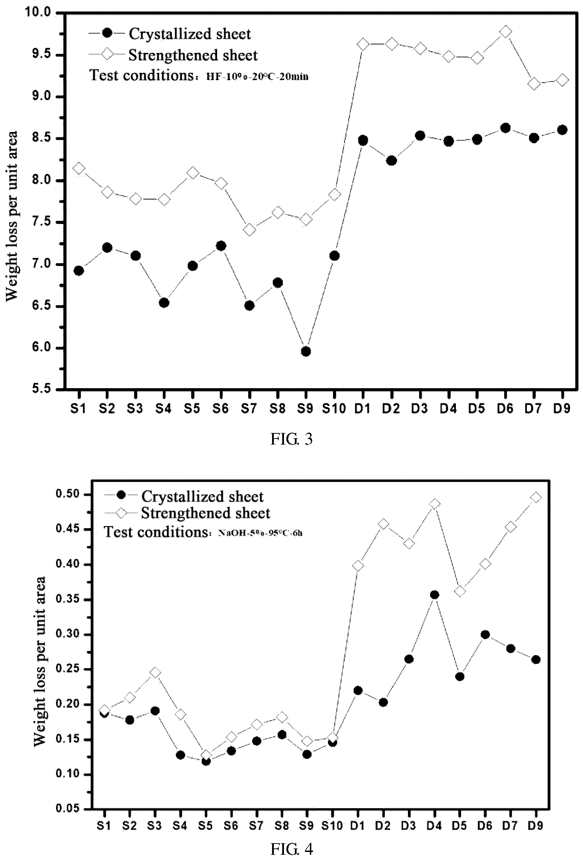

FIG. 3 shows profiles of weight loss per unit area of crystallized sheets and strengthened sheets for Examples S1-S10 and Comparative Examples D1-D9 put in a hydrofluoric acid solution with a mass concentration of 10% and left standing therein at 20°C for 20 min.
FIG. 4 shows profiles of weight loss per unit area of the crystallized sheets and strengthened sheets of Examples S1-S10 and Comparative Examples D1-D9 put in a sodium hydroxide solution with a mass concentration of 5% and left standing therein at 95°C for 6 h.

**DETAILED DESCRIPTION**

The present application provides a transparent glass-ceramic having excellent acid and alkali resistance and a preparation method therefor, so as to realize the acid and alkali resistance and take into account the strength of the glass-ceramic.

Specifically, the present application provides a glass-ceramic having excellent acid and alkali resistance, the glass-ceramic composition comprising the following components in molar percentage based on the total number of moles of the components of the glass-ceramic:

$$67.0\% \leq SiO_2 \leq 71.0\%;$$

$$3.5\% \leq Al_2O_3 \leq 4.5\%;$$

$$0.7\% \leq P_2O_5 \leq 1.5\%; \text{ preferably } 1.0\% \leq P_2O_5 \leq 1.5\%;$$

$$1.5\% \leq ZrO_2 \leq 4.0\%; \text{ preferably } 2.0\% \leq ZrO_2 \leq 3.0\%;$$

$$0\% < Na_2O \leq 1.0\%;$$

$$0\% < K_2O \leq 0.5\%;$$

$$20.0\% \leq Li_2O \leq 23.0\%;$$

$$0\% < CaO \leq 1.8\%, \text{ preferably } 0\% < CaO \leq 1.5\%;$$

$$0\% < B_2O_3 \leq 0.7\%;$$

$$0\% \leq MgO \leq 1.0\%;$$

and

$$0\% \leq BaO \leq 0.8\%.$$

$SiO_2$ is an oxide that forms the skeleton of the glass network and is used to stabilize the network structure of glass and glass-ceramic, and it is used to constitute crystalline phases such as lithium disilicate, petalite, β-spodumene and quartz in a lithium-aluminum-silicate system. When a base glass is heat treated and converted into glass-ceramics, a content of $SiO_2$ should be high enough to form petalite, lithium disilicate. When the content of $SiO_2$ is too small, the glass tends to have a higher thermal expansion coefficient and reduced thermal shock resistance; when the content of $SiO_2$ is too much, the glass meltbility deteriorates, or the viscosity of the molten glass liquid rises, so that it is difficult to clarify the glass liquid, the difficulty of the glass molding becomes higher, the productivity is reduced, and the time required for crystallization of the glass becomes longer. In some embodiments, the molar percentage of $SiO_2$ is 67.0% to 71.0%. In some embodiments, the molar percentage of $SiO_2$ is 68.0% to 69.5%. In some embodiments, the glass-ceramic may comprise $SiO_2$ having a molar percentage of 67.0% to 71.0%, 68.0% to 69.5%, 67.0% to 69.5%, 68.0% to 71.0%, 67.3% to 71.0%, 67.5% to 71.0%, 67.7% to 71.0%, 68.2% to 71.0%, 68.5% to 71.0%, 68.8% to 71.0%, 69.0% to 71.0%, 69.0% to 69.8%, 69.0% to 69.5%, 69.0% to 69.3%. In some embodiments, the glass-ceramic may comprise $SiO_2$ having a molar percentage of 67.0%, 67.1%, 67.2%, 67.3%, 67.4%, 67.5%, 67.6%, 67.7%, 67.8%, 67.9%, 68.0%, 68.1%, 68.2%, 68.3%, 68.4%, 68.5%, 68.6%, 68.7%, 68.8%, 68.9%, 69.0%, 69.1%, 69.2%, 69.3%, 69.4%, 69.5%, 69.6%, 69.7%, 69.8%, 69.9%, or 71.0%, or any percentage within the range of any two of the above specified values as endpoints. It should be understood that in specific embodiments, any of the above ranges may be combined with any other range as desired, as long as a glass with the desired properties of the present application can be obtained .

$Al_2O_3$ is used to form the glass skeleton. $Al_2O_3$ is coordinated around the nucleus, forming a "center-shell" structure, this structure makes it difficult for the nucleus component to supply from the outer part of the shell, the nucleus is not easy to grow, and it is easy to form a plurality of tiny crystal grains. $Al_2O_3$ stabilizes the structure of the glass network, improves the mechanical and chemical durability, and inhibits the phasing of the glass, reduces the thermal expansion coefficient, and improves the strain point. When the content of $Al_2O_3$ is too small, the glass tends to have a higher thermal expansion coefficient, and its chemical durability is reduced, and the nucleus becomes larger, and the crystallized glass is prone to whitish clouding; when the content of $Al_2O_3$ is too much, the glass meltbility become poor, the production becomes difficult, and the crystal of mullite is easy to precipitate so that the glass undergoes devitrification. The molar percentage of $Al_2O_3$ is 3.5% to 4.5%. In some embodiments, the molar percentage of $Al_2O_3$ is 3.8% to 4.3%. In some embodiments, the molar percentage of $Al_2O_3$ can be 3.5%, 3.6%, 3.7%, 3.8%, 3.9%, 4.0%, 4.1%, 4.2%, 4.3%, 4.4%, or 4.5%, or any percentage within the range of any two of the above specified values as endpoints. It should be understood that in specific embodiments, any of the above ranges may be combined with any other range as desired, as long as a glass with the desired properties of the present application can be obtained.

$Li_2O$ is a major component of petalite and lithium disilicate crystals, and is also necessary for chemical strengthening. When the content of $Li_2O$ is too small, the glass is prone to precipitate crystalline phases such as mullite, which makes the glass undergo devitrification, the meltbility decreases or the viscosity increases, it is difficult to clarify, and the molding becomes difficult; when the content of $Li_2O$ is too much, the crystallization ability of the glass becomes too strong, the glass has a tendency of devitrification, and the crystallized glass becomes easy to be broken. The molar percentage of $Li_2O$ is 20.0% to 23.0%. In some embodiments, the molar percentage of $Li_2O$ is 20.5% to 21.5%. In some embodiments, the molar percentage of $Li_2O$ can be 20.0%, 20.1%, 20.2%, 20.3%, 20.4%, 20.5%, 20.6%, 20.7%, 20.8%, 20.9%, 21.0%, 21.1%, 21.2%, 21.3%, 21.4%, 21.5%, 21.6%, 21.7% , 21.8%, 21.9%, 22.0%, 22.1%, 22.2%, 22.3%, 22.4%, 22.5%, 22.6%, 22.7%, 22.8%, 22.9%, or 23.0%, or any percentage within the range of any two of the above specified values as endpoints. It should be understood that in specific embodiments, any of the above ranges may be combined with any other range as desired, as long as a glass with the desired properties of the present application can be obtained.

$SiO_2$, $Al_2O_3$, and $Li_2O$ are the main constituents of the main crystalline phase lithium disilicate and petalite, and $Li_2O$ and $Al_2O_3$ compensate each other's charge and solid-dissolve in the network skeleton formed by $SiO_2$. The molar ratio of $SiO_2/(Li_2O+Al_2O_3)$ is controlled to be in the range of 2.5 to 3.0, 2.6 to 3.0, 2.7 to 3.0, 2.8 to 3.0, or 2.9 to 3.0; or it may be 2.5, 2.6, 2.7, 2.8, 2.9, or 3.0, or any ratio within the range of any two of the above specified values as endpoints. It should be understood that in specific embodiments, any of the above ranges may be combined with any other range as desired, as long as a glass with the desired properties of the present application is obtained.

$P_2O_5$ is the formative oxide of the glass, which exists in the network structure as phosphorus-oxygen tetrahedra $[PO_4]$, and $P_2O_5$ acts as a fluxing agent with the dispersion coefficient of the glass and the ability to transmit ultraviolet light. It effectively inhibits the precipitation of coarse $ZrO_2$ crystals. When the content of $P_2O_5$ is too small, the precipitated coarse

$ZrO_2$ crystals make the glass undergo devitrification; when the content of $P_2O_5$ is too much, the content of precipitated microcrystals decreases, and the thermal expansion coefficient of the glass is prone to become high. The molar percentage of $P_2O_5$ is 0.7% to 1.5%, preferably 1.0% to 1.5%. In some embodiments, the molar percentage of $P_2O_5$ may be 0.7%, 0.8%, 0.9%, 1.0%, 1.1%, 1.2%, 1.3%, 1.4%, or 1.5%, or any percentage within the range of any two of the above specified values as endpoints. It should be understood that in specific embodiments, any of the above ranges may be combined with any other ranges as desired, as long as a glass with the desired properties of the present application can be obtained.

$Na_2O$ is a glass modifier oxide, which can provide free oxygen to increase the oxygen-silicon ratio in the glass structure, break bonds, increase the thermal expansion coefficient of the glass, and play an important role in regulating the crystal grain size, crystalline phase composition, crystalline phase ratio, etc.; lowering $Na_2O$ content improves the thermal and chemical stability and mechanical strength of the glass, and therefore the weather resistance of the glass will be improved. However, if $Na_2O$ is to be completely removed, it will lead to a longer strengthening time and a lower strengthening efficiency, affecting the strengthening effect, and after removing $Na_2O$, other raw material compositions need to be supplemented, and there exists the problem of increased manufacturing cost, based on which a certain amount of $Na_2O$ needs to be present in the glass, i.e., the amount of $Na_2O$ is to be greater than 0%, and therefore the molar percentage of $Na_2O$ is 0% to 1.0% (exclude 0). In some embodiments, the molar percentage of $Na_2O$ may be 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, or 1.0%, or any percentage within the range of any two of the above specified values as endpoints. It should be understood that in specific embodiments, any of the above ranges may be combined with any other ranges as desired, as long as the glass with the desired properties of the present application can be obtained.

$K_2O$ is also a glass modifier oxide, because the radius of $K_+$ is larger than that of $Na_+$, so adding $K_2O$ can reduce the tendency of precipitation crystallization of glass and increase the transparency and luster of glass. However, when the content of $K_2O$ is too much, the crystallization ability of the glass becomes stronger, the glass is prone to undergo devitrification, and the crystallized glass is prone to break. The ionic radius of $K^+$ is larger than that of $Li^+$ as the composition of the main crystalline phase, and it is not easy to enter into the crystals, and therefore the crystallized $K^+$ remains in the glass phase. The molar percentage of $K_2O$ is for is 0% to 0.50% (exclude 0). In some embodiments, the molar percentage of $K_2O$ may be 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, or 0.50%, or any percentage within the range of any two of the above specified values as endpoints. It should be understood that in specific embodiments, any of the above ranges may be combined with any other ranges as desired, as long as a glass with the desired properties of the present application can be obtained.

$ZrO_2$, as a nucleating agent for glass-ceramics, improves the viscosity, hardness, elasticity, refractive index, chemical stability, and reduces the hermal expansion coefficient of the glass. $ZrO_2$ can be used to improve the stability of lithium-aluminum-silica based glasses by significantly lowering the liquid-phase line temperature and the glass devitrification during the formation process. The increase of nucleating agents allows the formation of finer crystal grains, but excess $ZrO_2$ produces a white zirconium precipitate when the glass is melted and poured, which is detrimental to the production of transparent glass-ceramics. By adjusting the content of P and Zr, the nucleation can be promoted, the number of nuclei can be increased, the size of crystals can be reduced, and good optical effects can also be obtained in the case of having a hetero-crystalline phase. When the content of $ZrO_2$ is too small, nuclei cannot be formed sufficiently, and coarse crystals are prone to precipitate and make the glass whitish and undergo devitrification. The molar percentage of $ZrO_2$ is 1.5% to 4.0%, preferably 2.0% to 3.0%. In some embodiments, the molar percentage of $ZrO_2$ may be 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, or 4.0%, or any percentage within the range of any two of the above specified values as endpoints. It should be understood that in specific embodiments, any of the above ranges may be combined with any other range as desired, as long as a glass with the desired properties of the present application is obtained.

$B_2O_3$ helps to reduce the melting temperature of the base glass, and in the glass-ceramic it is favorable to obtain the interlocking crystal microstructure, so that the damage resistance of the glass-ceramic is improved. $B_2O_3$ takes the boron-oxygen triangular body $[BO_3]$ and the boron-oxygen tetrahedral body $[BO_4]$ as the structural unit, and it reduces the coefficient of expansion of the glass, and improves the thermal stability and chemical stability of the glass. When the added amount of $B_2O_3$ is too much, the thermal expansion coefficient of the glass increases instead due to the increased content of boron-oxygen triangular body, and the boron anomaly appears. When the boron in the residual glass phase is in the state of triangular coordination, and the triple-coordinated boron-oxygen triangular body is not as strong as the boron-oxygen tetrahedral body, there will be the effect of opening the network structure, so the boron in the residual glass phase will reduce the viscosity of the residual glass phase, which will promote the growth of the lithium silicate crystals, especially the larger crystals. At the same time, the large amount of boron-oxygen triangular body in the glass-ceramic will show larger Vickers indentation cracks. In addition, the chemical durability of the glass deteriorates when there is a high content of $B_2O_3$. The molar percentage of $B_2O_3$ is 0% to 0.7% (exclude 0). In some embodiments, the molar percentage of $B_2O_3$ may

be 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, 0.50%, 0.51%, 0.52%, 0.53%, 0.54%, 0.55%, 0.56%, 0.57%, 0.58%, 0.59%, 0.60%, 0.61%, 0.62%, 0.63%, 0.64%, 0.65%, 0.66%, 0.67%, 0.68%, 0.69%, or 0.70%, or any percentage within the range of any two of the above specified values as endpoints. It should be understood that in specific embodiments, any of the above ranges may be combined with any other ranges as desired, as long as a glass with the desired properties of the present application can be obtained.

CaO increases the chemical stability and mechanical strength of the glass, CaO reduces the viscosity of the glass, enhances the meltbility and moldability of the glass, and can also be used to adjust the thermal expansion coefficient and refractive index of the glass-ceramic. When the content of CaO is excessive, the glass is prone to undergo devitrification after crystallization treatment, and excessive CaO residue in the glass phase produces a refractive index difference with the main crystalline phase, reducing the optical properties of the glass-ceramic. The molar percentage of CaO is 0% to 1.8% (exclude 0), and preferably 0 to 1.5% (exclude 0). In some embodiments, the molar percentage of CaO may be 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, 0.50%, 0.51%, 0.52%, 0.53%, 0.54%, 0.55%, 0.56%, 0.57%, 0.58%, 0.59%, 0.60%, 0.61%, 0.62%, 0.63%, 0.64%, 0.65%, 0.66%, 0.67%, 0.68%, 0.69%, 0.70%, 0.71%, 0.72%, 0.73%, 0.74%, 0.75%, 0.76%, 0.77%, 0.78%, 0.79%, 0.80%, 0.81%, 0.82%, 0.83%, 0.84%, 0.85%, 0.86%, 0.87%, 0.88%, 0.89%, 0.90%, 0.91%, 0.92%, 0.93%, 0.94%, 0.95%, 0.96%, 0.97%, 0.98%, 0.99%, 1.00%, 1.01%, 1.02%, 1.03%, 1.04%, 1.05%, 1.06%, 1.07%, 1.08%, 1.09%, 1.10%, 1.11%, 1.12%, 1.13%, 1.14%, 1.15%, 1.16%, 1.17%, 1.18%, 1.19%, 1.20%, 1.21%, 1.22%, 1.23%, 1.24%, 1.25%, 1.26%, 1.27%, 1.28%, 1.29%, 1.30%, 1.31%, 1.32%, 1.33%, 1.34%, 1.35%, 1.36%, 1.37%, 1.38%, 1.39%, 1.40%, 1.41%, 1.42%, 1.43%, 1.44%, 1.45%, 1.46%, 1.47%, 1.48%, 1.49%, 1.50%, 1.51%, 1.52%, 1.53%, 1.54%, 1.55%, 1.56%, 1.57%, 1.58%, 1.59%, 1.60%, 1.61%, 1.62%, 1.63%, 1.64%, 1.65%, 1.66%, 1.67%, 1.68%, 1.69%, 1.70%, 1.71%, 1.72%, 1.73%, 1.74%, 1.75%, 1.76%, 1.77%, 1.78%, 1.79%, or 1.80%, or any percentage within the range of any two of the above specified values as endpoints. It should be understood that in specific embodiments, any of the above ranges may be combined with any other ranges as desired, as long as a glass with the desired properties of the present application can be obtained.

MgO can partially enter petalite, which can slow down the hardening speed of the glass and improve the forming properties of the glass. MgO can also reduce the crystallization tendency and the crystallization speed, increase the high temperature viscosity of the glass, and improve the chemical stability and the mechanical strength of the glass. The thermal expansion coefficient of the glass has a tendency to become lower when the content of MgO is too low, and the crystallization becomes stronger and makes the glass-ceramic easy to undergo devitrification. The molar percentage of MgO is 0% to 1.0%. In some embodiments, the molar percentage of MgO may be 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, 0.50%, 0.51%, 0.52%, 0.53%, 0.54%, 0.55%, 0.56%, 0.57%, 0.58%, 0.59%, 0.60%, 0.61%, 0.62%, 0.63%, 0.64%, 0.65%, 0.66%, 0.67%, 0.68%, 0.69%, 0.70%, 0.71%, 0.72%, 0.73%, 0.74%, 0.75%, 0.76%, 0.77%, 0.78%, 0.79%, 0.80%, 0.81%, 0.82%, 0.83%, 0.84%, 0.85%, 0.86%, 0.87%, 0.88%, 0.89%, 0.90%, 0.91%, 0.92%, 0.93%, 0.94%, 0.95%, 0.96%, 0.97%, 0.98%, 0.99%, or 1.00%, or any percentage within the range of any two of the above specified values as endpoints. It should be understood that in specific embodiments, any of the above ranges may be combined with any other range as desired, as long as a glass with the desired properties of the present application can be obtained.

BaO is a component that reduces the viscosity of the glass, improves the meltbility and formability of the glass, and can also be used to adjust the thermal expansion coefficient and the refractive index of the glass-ceramic. The molar percentage of BaO is 0% to 0.8%. In some embodiments, the molar percentage of BaO may be 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, 0.50%, 0.51%, 0.52%, 0.53%, 0.54%, 0.55%, 0.56%, 0.57%, 0.58%, 0.59%, 0.60%, 0.61%, 0.62%, 0.63%, 0.64%, 0.65%, 0.66%, 0.67%, 0.68%, 0.69%, 0.70%, 0.71%, 0.72%, 0.73%, 0.74%, 0.75%, 0.76%, 0.77%, 0.78%, 0.79%, or 0.80%, or any percentage within the range of any two of the above specified values as endpoints. It should be understood that in specific embodiments, any of the above ranges may be combined with any other ranges as desired, as long as the glass with the desired properties of the present application can be obtained.

CaO, BaO, and MgO are components that improve the meltability and formability of the glass, and when these components are in excess, they reduce the low-temperature viscosity; $ZrO_2$ functions as a nucleating agent, its crystallization occurs first in the initial stage of crystallization, and it has the effect of inhibiting the flow of the residual glass phases. In order to obtain a glass-ceramic having an accordant shape and characteristics, the molar ratio of (CaO+BaO+M-

gO)/$ZrO_2$ is controlled to be 0.2 to 0.7. In some embodiments, the molar ratio of (CaO+BaO+MgO)/$ZrO_2$ can be controlled to be any of 0.2, 0.3, 0.4, 0.5, 0.6, or 0.7, or to be controlled to be any ratio within the range of any two of the above specified values as endpoints.

$Na_2O$, $K_2O$, CaO, BaO, and MgO are alkaline earth metals and alkali metals, which have a large influence on the chemical durability of the glass, and CaO+BaO+MgO$\geq$1.5$\times$($Na_2O$+$K_2O$) in the glass phase is controlled.

As $Li_2O$, $Na_2O$, $K_2O$ alkali metal oxides play a fluxing effect in the system, and Li is an integral part of the main crystalline phase petalite and lithium disilicate, and $ZrO_2$, as a nucleating agent in the system, should have a relatonship with alkali metal oxides of 10$\geq$($Na_2O$+$K_2O$+$Li_2O$)/$ZrO_2\geq$0.2, and preferably 10$\geq$($Na_2O$+$K_2O$+$Li_2O$)/$ZrO_2\geq$5, more preferably 9$\geq$($Na_2O$+$K_2O$+$Li_2O$)/$ZrO_2\geq$7, in order to achieve the best meltbility and ideal crystallinity and crystal phase content.

In some embodiments, the component content of the glass-ceramic satisfies the following conditions:

$$ZrO_2+P_2O_5\geq7.6\times B_2O_3.$$

In some embodiments, the glass-ceramic comprises the following components in molar percentage based on the total number of moles of the components of the glass-ceramic:

$$68.0\%\leq SiO_2\leq69.5\%;$$

$$3.8\%\leq Al_2O_3\leq4.3\%;$$

$$1.0\%\leq P_2O_5\leq1.5\%;$$

$$2.5\%\leq ZrO_2\leq3.0\%;$$

$$0.1\%\leq Na_2O\leq1.0\%;$$

$$0.1\%\leq K_2O\leq0.3\%;$$

$$20.5\%\leq Li_2O\leq21.5\%;$$

$$0.5\%\leq CaO\leq1.5\%;$$

$$0.1\%\leq B_2O_3\leq0.4\%;$$

$$0\%\leq MgO\leq1.0\%;$$

and

$$0\%\leq BaO\leq0.8\%.$$

In some embodiments, the glass-ceramic comprises a crystal phase, and the main crystalline phase of the crystal phase is a lithium disilicate crystalline phase and a petalite crystalline phase. It is accompanied by possible heterogeneous phases such as quartz, spodumene, lithium metasilicate, etc. Lithium disilicate $Li_2Si_2O_5$ is orthorhombic crystal, and its crystals are often flattened with obvious dissociation surfaces, and this crystalline phase forces cracks to expand along the twisted crystal grain boundaries due to its irregular orientation, which reduces the possibility of crack expansion. Petalite $LiAlSi_4O_{10}$ is a monoclinic crystal, with Li and O being tetrahedrally coordinated, and petalite can be chemically strengthened in a salt bath, where $Na^+$ in the salt bath replaces some of the $Li^+$ in the petalite.

In some embodiments, the crystal phase comprises at least 80.00 wt% of the glass-ceramic, preferably 80 wt% to 97 wt%, more preferably 85 wt% to 96 wt%. In some embodiments, the crystal phase constitutes 80.00 wt%, 81.00 wt%, 82.00 wt%, 83.00 wt%, 84.00 wt%, 85.00 wt%, 86.00 wt%, 87.00 wt%, 88.00 wt%, 89.00 wt%, 90.00 wt%, 91.00 wt%, 92.00 wt%, 93.00 wt%, 94.00 wt%, 95.00 wt%, 96.00 wt%, or 97.00 wt%, or any percentage within the range of any two of the above specified values as endpoints of the glass-ceramic. It should be understood that in specific embodiments, any of the above ranges may be combined with any other ranges as desired, as long as a glass with the desired properties of the present application is obtained.

In some embodiments, the average size of the crystal grains in the glass-ceramic is 10 nm to 50 nm, preferably 10 nm to 30 nm. In some embodiments, the average size of the crystal grains may be 10 nm, 12 nm, 14 nm, 16 nm, 18 nm, 20 nm, 22 nm, 24 nm, 26 nm, 28 nm, 30 nm, 35 nm, 38 nm, 40 nm, 45 nm, 48 nm, or 50 nm, or any value within the range of any two of the above specified values as endpoints. It should be understood that in specific embodiments, any of the above ranges may be combined with any other ranges as desired, as long as a glass with the desired properties of the present application can be obtained.

In some embodiments, at a thickness of 0.7 mm, the glass-ceramic is transparent and has a transmittance of not less than 90.00%, preferably not less than 90.20%, more preferably not less than 90.40%, more preferably not less than 90.60%, more preferably not less than 90.80%, more preferably not less than 91.00%, more preferably not less than 91.20%, more preferably not less than 91.40%, more preferably not less than 91.60%, more preferably not less than 91.80%, more preferably not less than 92.00%, more preferably not less than 92.20%, more preferably not less than 92.40%, more preferably not less than 92.60%, more preferably not less than 92.80%, more preferably not less than 93.00% for light at a wavelength of 550 nm.

In some embodiments, the glass-ceramic comprises a compressive stress layer formed by ion exchange, and the depth of the compressive stress layer DOL_0 on any surface of the glass-ceramic is 15% to 25% of the thickness of the glass-ceramic. In some embodiments, the depth of the compressive stress layer DOL_0 on any surface of the glass-ceramic may be 15%, 16%, 17%, 18%, 19%, 20%, 21%, 22%, 23%, 24%, or 25%, or any percentage within the range of any two of the above specified values as endpoints of the thickness of the glass-ceramic. In some embodiments, the glass-ceramic has a thickness of 0.7 mm, and the depth of the compressive stress layer DOL_0 on any surface of such glass-ceramic is 105 $\mu$m to 175 $\mu$m.

In the present application, those skilled in the art may select the thickness of the glass-ceramic according to the needs. Exemplarily, in some embodiments, the thickness of the glass-ceramic is 0.2 mm to 2 mm.

In some embodiments, the glass-ceramic has a tensile stress linear density CT_LD of 45,000 MPa/mm to 64,000 MPa/mm. In some embodiments, the glass-ceramic may have a tensile stress linear density CT_LD of 45,000 MPa/mm, 46,000 MPa/mm, 47,000 MPa/mm, 48,000 MPa/mm, 49,000 MPa/mm, 50,000 MPa/mm, 51,000 MPa/mm, 52,000 MPa/mm, 53,000 MPa/mm, 54,000 MPa/mm, 55,000 MPa/mm, 56,000 MPa/mm, 57,000 MPa/mm, 58,000 MPa/mm, 59,000 MPa/mm mm, 60,000 MPa/mm, 61,000 MPa/mm, 62,000 MPa/mm, 63,000 MPa/mm, or 64,000 MPa/mm, or a tensile stress linear density of any value within the range of any two of the above specified values as endpoints.

In some embodiments, the surface compressive stress of the glass-ceramic is 350 Mpa to 500 MPa. In some embodiments, the surface compressive stress of the glass-ceramic may be 350 Mpa, 400 MPa, 450 MPa, or 500 MPa, or a surface compressive stress of any value within the range of any two of the above specified values as endpoints.

In some embodiments, the glass-ceramic has a |CT_AV| of 80 Mpa to 110 MPa. In some embodiments, the |CT_AV| of the glass-ceramic may be 80 MPa, 90 MPa, 100 MPa, or 110 MPa, or any value within the range of any two of the above specified values as endpoints.

In addition, the present application provides a preparation method for a glass-ceramic, which comprises the following steps.

(1) Preparation of a base glass: melting and molding a mixture of raw material substances and then annealing to obtain the base glass. The molding methods include but are not limited to float, overflow, calendering and casting. The melting temperature is 1500°C to 1650°C; the annealing temperature is 450°C to 550°C, and the heat preservation is 12 h to 24 h. Taking Example S1 as an example, the ingredients are mixed for 30 minutes according to the formulation of S1, and the total amount of the mixture is 1000 g, and after mixing, 5 g of the clarifying agent (NaCl) is added, and the mixture is melted for 5 hours at 1650°C in a platinum crucible, and after that, it is poured into a molding mold for molding, and then cooled to 900°C and then annealed in a 500°C annealing furnace for 12 hours, after which the base glass is cooled to room temperature in the furnace, and the base glass is obtained. The preparation of the base glass of the other embodiments is the same as Example S1.

(2) Preparation of a glass-ceramic brick: heating the base glass obtained in step (1) sequentially for nucleation treatment and crystallization treatment to obtain the glass-ceramic brick. The base glass is heat-treated using a precision annealing furnace, and the heat treatment process includes two parts, i.e., nucleation and crystallization, and the nucleation process is $T_g$+$\Delta$t°C/240 min ($T_g$ indicates the temperature of the glass transition point, 5°C$\leq$$\Delta$t$\leq$50°C); the crystallization process is $T_g$+$\Delta T_1$/90 min to 240 min (wherein 70°C$\leq$$\Delta T_1$$\leq$170°C), and the glass-ceramic bricks are ultimately obtained. Or, after the nucleation treatment, semi-crystallization treatment is done, and the crystallization process is $T_g$+$\Delta T_2$/90 min to 240 min (wherein 70°C$\leq$$\Delta T_2$$\leq$150°C), and in the semi-crystallization treatment, after the crystallization degree of the base glass is made to reach 1/3 to 4/5 of the crystallization degree required for the final glass-ceramic product, a 3D hot bending treatment is also carried out, and the glass-ceramic brick is obtained.

In some embodiments, the nucleation treatment is carried out for 90 min to 240 min at 530°C to 565°C; and the crystallization treatment is carried out for 90 min to 240 min at 640°C to 700°C. The nucleation treatment time herein refers to the time of holding the crystallization furnace at a set nucleation temperature after the crystallization furnace has been heated up to the set nucleation temperature with a set rate. The crystallization treatment time herein refers to the time of holding the crystallization furnace at a set crystallization temperature after the crystallization furnace has been heated up to the set crystallization temperature with a set rate.

In some embodiments, the crystallization treatment is semi-crystallization treatment, and in the semi-crystallization treatment, after the degree of crystallization of the base glass reaches 1/3 to 1/2 of the degree of crystallization required for the final glass-ceramic product, a 3D hot bending treatment is also carried out to obtain a glass-ceramic; preferably, the 3D hot bending treatment is a hot bending treatment of three stages: preheating at a temperature of 450°C to 720°C, hot bending at a temperature of 720°C to 820°C, and cooling to room temperature.

(3) Cold processing:

subjecting the glass-ceramic brick obtained in step (2) to cold processing treatment. The cold processing treatment includes slicing treatment, before the slicing treatment the glass-ceramic brick can be subjected to shape-correction treatment, after the slicing treatment, CNC treatment, grinding treatment, and polishing treatment can be carried out in turn, or after the slicing treatment, at least one method selected from the group consisting of CNC treatment, grinding treatment, and polishing treatment is carried out for modification treatment of the glass sheet, and a sample sheet of the glass-ceramic (i.e., a crystallized sheet), such as a sample sheet of the glass-ceramic of about 50 mm * 50 mm * 0.7 mm, is obtained.

The sample sheet of the glass-ceramic (i.e., a glass-ceramic that is not chemically strengthened, a crystallized sheet) can be prepared and obtained after steps (1) to steps (3), and the sample sheet of the glass-ceramic prepared herein are tested to have excellent acid and alkali resistance, with the following specific test results:

the sample sheet of the glass-ceramic is put in a hydrochloric acid solution with a mass concentration of 5% and left standing therein at 95°C for 24 h, the glass-ceramic has a weight loss rate per unit area x1, $x1 < 0.050$ g/cm$^2$; and/or the sample sheet of the glass-ceramic is put in a hydrofluoric acid solution with a mass concentration of 10% and left standing therein at 20°C for 20 min, the glass-ceramic has a weight loss rate per unit area x2, $x2 \leq 8.00$ g/cm$^2$; and/or, the sample sheet of the glass-ceramic is put in a sodium hydroxide solution with a mass concentration of 5% and left standing therein at 95°C for 6 h, the glass-ceramic has a weight loss rate per unit area x3, $x3 \leq 0.20$ g/cm$^2$.

In some optional embodiments, the method further includes the step of:

(4) chemical strengthening treatment: the sample sheet of the glass-ceramic obtained in step (3) (i.e., the crystallized sheet) is placed in a high temperature salt bath at a temperature of 350°C to 550°C, with a salt bath composition of 30 wt% to 100 wt% $NaNO_3$ (preferably 30 wt% to 90 wt% of $NaNO_3$) and/or 0 wt% to 70 wt% $KNO_3$ (preferably 10 wt% to 70 wt% $KNO_3$), and $LiNO_3$ is added in a content of 0.01 wt% to 0.10 wt% relative to the total weight of the mixed salt bath, one or more ion exchanges are carried out to obtain a strengthened glass-ceramic (i.e., a strengthened sheet, or also known as a strengthened glass-ceramic), which is capable of reaching a tensile stress linear density of 45,000 MPa/mm to 64,000 MPa/mm.

After the chemical strengthening treatment in step (4), a compressive stress layer is formed on the surface of the glass-ceramic as a result of ion exchange, and the depth of the compressive stress layer DOL_0 on either surface of the glass-ceramic is 15% to 25% of the thickness of the glass-ceramic.

The glass-ceramic having the compression stress layer produced after step (4) was tested and still has an excellent acid and alkali resistance, and the specific test results are as follows:

the glass-ceramic is put in a hydrochloric acid solution with a mass concentration of 5% and left standing therein at 95°C for 24 h, the glass-ceramic has a weight loss rate per unit area x4, $x4 < 0.150$ g/cm$^2$; and/or the glass-ceramic is put in a hydrofluoric acid solution with a mass concentration of 10% and left standing therein at 20°C for 20 min, the glass-ceramic has a weight loss rate per unit area x5, $x5 \leq 8.50$ g/cm$^2$; and/or the glass-ceramic is put in a sodium hydroxide solution with a mass concentration of 5% and left standing therein at 95°C for 6 h, the glass-ceramic has a weight loss rate per unit area x6, $x6 < 0.25$ g/cm$^2$.

3. Use of the glass-ceramic of the present application

The glass-ceramic provided by the present application can be applied as a display panel or display screen in an intelligent electronic product, such as applied in a cell phone, a monitor, a tablet computer, an electronic watch, a smart bracelet, a smart watch, a television, and smart glasses.

The glass-ceramic provided by the present application can also be used in a glass device.

In all descriptions in the present application, relevant details are specially stated to understand the application. All technical and scientific terms used in the present application have the same meaning as commonly understood by those skilled in the art to which the present application belongs. Specific details are set forth below:

### Explanation of Terms

Transmittance: it is a ratio of a radiant energy projected and transmitted through an object to a total radiant energy projected onto the object as the incident light flux leaves from an illuminated surface or an incident side of a medium to the other side.

Refractive index: it is a ratio of the speed of propagation of light in a vacuum to the speed of propagation of light in a medium.

In the Examples and Comparative Examples of the present application, the transmittance of the glass-ceramic at a wavelength of 550 nm is an average of the transmittance measured at the wavelength of 550 nm for a plurality of glass samples from the same batch. At least 5 samples of glass-ceramic from each batch are taken for testing.

Nucleation: it is a growth of small crystal nucleus of a nucleating material in the glass by heat treatment.

Crystallization: it is a growth of some kind of crystals on the basis of nuclei in glass by heat treatment.

b-value: it is a value indicates the yellow-blue value of a material, the b-value in the present application is the transmitted light b-value, in which a positive b-value indicates that the material is bluish; measured using Konica Minolta spectrophotometer CM-3600A, Japan.

Base glass: glass that has not been nucleated, crystallized, or strengthened.

Glass-ceramics: it is also known as microcrystalline glass, a class of solid composite materials containing both glass and crystal phases (or also known as microcrystalline phase and crystalline phases) prepared by targeted controlled crystallization of the base glass.

CT_LD: tensile stress linear density, the glass-ceramic is subjected to ion exchange in a salt bath to form a compressive stress layer (i.e., a strengthened layer), and a tensile stress layer is formed within the glass during the ion exchange process, the tensile stress layer having an upper boundary spaced at a distance from the upper surface of the strengthened glass-ceramic and a lower boundary spaced at a distance from the lower surface of the strengthened glass-ceramic. A tensile stress curve is recorded and drawn as a curve, in which a Y-axis refers to the tensile stress at a point on a line segment, which is in the tensile stress layer and is perpendicular to both the upper and lower boundaries, with upper and lower endpoints falling on the upper and lower boundaries respectively, and an X-axis refers to a distance between said point and the upper boundary. The ratio of the constant integral of the tensile stress curve to the thickness of the strengthened glass-ceramics is recorded as the tensile stress linear density, that is, the ratio of the sum of the tensile stress of the strengthened glass-ceramics measured by the SLP-2000 stress meter to the thickness of the glass. The tensile stress linear density of the glass-ceramic after chemical strengthening described in the present application can reach 45,000 MPa/mm to 64,000 MPa/mm.

|CT_AV|: it is an absolute value of the average tensile stress, specifically the absolute value of the average value of all tensile stresses in the tensile stress layer, obtained by the SLP-2000 stress meter test.

DOL_0: it is a depth of the compressive stress layer, specifically the distance from any surface of the strengthened glass-ceramic to the position where the compressive stress close to that surface is zero, obtained by SLP-2000 stress meter test.

Surface compressive stress: surface CS, glass-ceramic or glass-ceramics after chemical strengthening, the alkali metal ions having a smaller surface radius are replaced by the alkali metal ions having a larger radius, due to the "crowding" effect of the alkali metal ions having a larger radius, the glass surface thus generates compressive stresses, known as surface compressive stress. Surface CS is obtained by SLP-2000 stress meter.

SOC: it is a stress optical coefficient. Photoelasticity mainly refers to the anisotropic birefringence phenomenon that occurs in transparent materials after being subjected to a force. Through the measurement of stress optical coefficient and birefringence, the value of internal residual stress (MPa) of the material can be obtained.

### Instruments and Test Methods

Thickness of the glass: determined by micrometer test. The change in thickness of the glass-ceramic before and after chemical strengthening was very small and negligible.

Crystal content (or also known as, crystal phase content) test: X-ray diffractometer was used to test the glass-ceramic samples, to obtain an XRD diffraction peak curve, and then the X-ray diffractometer (Shimadzu XRD-6000) test result file (RAW format) was imported into the X-ray diffraction data Rietveld refining software (e.g., Gsas, Fullprof, Maud), and then fitted and calculated, and the crystal content in the glass-ceramic sample can be obtained. The ratio of the peak area of the fitted crystalline phase and the total peak area of the fitted crystalline phase is the crystal content. The X-ray diffractometer used in the present application was Shimadzu XRD-6000, and the diffraction angle range used for the test was $2\theta=10°$ to $50°$, the scanning speed was $6°/\text{min}$, the operating voltage was 40 kV, and the operating current was 30 mA.

The average size of the crystal grains (or also known as, the average crystal grain size) was obtained as follows: the glass-ceramic samples were tested using an X-ray diffractometer, and the resultant data obtained from the XRD test were used to obtain the average size of the crystal grains using Scherrer's formula $D = K\lambda/(\beta\cos\theta)$, with $\lambda$ being the wavelength of the X-rays, $\beta$ being the half-height width of the peaks, and $K = 0.89$.

Transmittance and b-value test: referring to the standard GB/T 7962.12-2010 Test Methods for Colorless Optical Glass Part 12: Intra-spectral Transmittance Ratio, the transmittance and b-value of the glass-ceramic were tested by a professional testing instrument. The testing instruments used in the present application were Konica Minolta Spectrophotometer CM-3600A from Japan and Shimadzu UV-2000 Ultraviolet Visible Spectrophotometer.

Testing of surface compressive stress (surface CS), DOL_0, |CT_AV|: the test was performed using a stress meter SLP-2000 (ORIHARA, Japan) with a light source wavelength of 518 nm, SOC=25.5 (nm/cm)/MPa, refractive index = 1.54, and an exposure time of $300~\mu\sec$.

To test the surface CS, |CT_AV|, DOL_0, it is necessary to put a drop of its special refractive solution on the stress meter, then wipe the strengthened glass-ceramic articles clean, put them on the test path, and test their values. The refractive index of the refractive solution used for SLP-2000 is 1.51.

The CT_LD correlates with the thickness of the glass sheet, the depth of strengthening and the average tensile stress and can be used to assess the drop resistance of the glass sheet. In the present application, the CT_LD satisfies the following equation:

$$\text{CT\_LD} = \frac{(1000d/2 - \text{DOL\_0}) \times |\text{CT\_AV}| \times 2}{d}$$

In the equation, d denotes the thickness of the glass-ceramic sheet (the thickness of the glass in the following Examples and Comparative Examples of the present application is 0.7 mm), the unit is mm; DOL 0 denotes the depth of the compressive stress layer, the unit is $\mu$m; and CT_AV denotes the internal average tensile stress, and the absolute value is taken in the calculation, the unit is MPa. In the present application, in the equation for the calculation of the tensile stress linear density, the data is substituted into for the calculation in accordance with the requirements for the above mentioned units, and the calculation result is obtained, the unit is not involved in the calculation.

The acid and alkali resistant glass-ceramic of the present application and the preparation method therefor are described in detail below by means of specific examples.

Example S1:

(1) Preparation of the base material glass: the raw material substances were mixed for 30 minutes in accordance with the formulation ingredient proportion of Example S1 in Table 1-1 below, and the total amount of the mixture was 1000 g. After mixing, 5 g of clarifying agent (NaCl) was added and melted in a platinum crucible at 1650°C for 5 hours, and after that, it was poured into a molding mold for molding, and then cooled down to 900°C, and then placed into a 500°C annealing furnace for 12 hours, after which it was cooling to room temperature with the furnace (at a rate of about 5 °C/min down to room temperature), and the base glass was obtained. It was observed that the base glass appearance is transparent.

(2) Preparation of the glass-ceramic brick: the base glass was heat-treated using a precision annealing furnace, and the heat-treatment process included two parts, i.e., nucleation and crystallization, and the conditions of the heat-treatment process are shown in Table 1-1, wherein the nucleation treatment temperature of Example S1 was 545°C (at a rate of 10 °C/min of the temperature rise from room temperature to the nucleation treatment temperature), and the treatment time was 240 min; at a rate of 10 °C/min of the temperature rise from the nucleation treatment temperature to the crystallization treatment temperature of 675°C, the processing time was 90 min, and finally the desired glass-ceramic brick was obtained.

(3) Cold processing: the glass-ceramic brick obtained in step (2) was trimmed by grinding and polishing machine, and then made the glass-ceramic brick to be cut into sheets by multi-line cutting machine. The sheet was processed by CNC machine tool for the desired size of the glass-ceramic samples, such as length, width and thickness of 50 mm * 50 mm * 0.7 mm glass sheet, and then a flat grinder and polisher were used for rough grinding and polishing to get the sample sheet of the glass-ceramic (referred to as "crystallized sheet", also known as "crystalline glass").

The 550 nm light transmittance test and crystalline phase test were carried out on the obtained crystallized sheet, and the specific test results are shown in Table 1-1. From Table 1-1, it can be seen that the 550 nm transmittance is 91.54%, and after testing, it is confirmed to contain the crystalline phases $Li_2Si_2O_5$ and $LiAlSi_4O_{10}$.

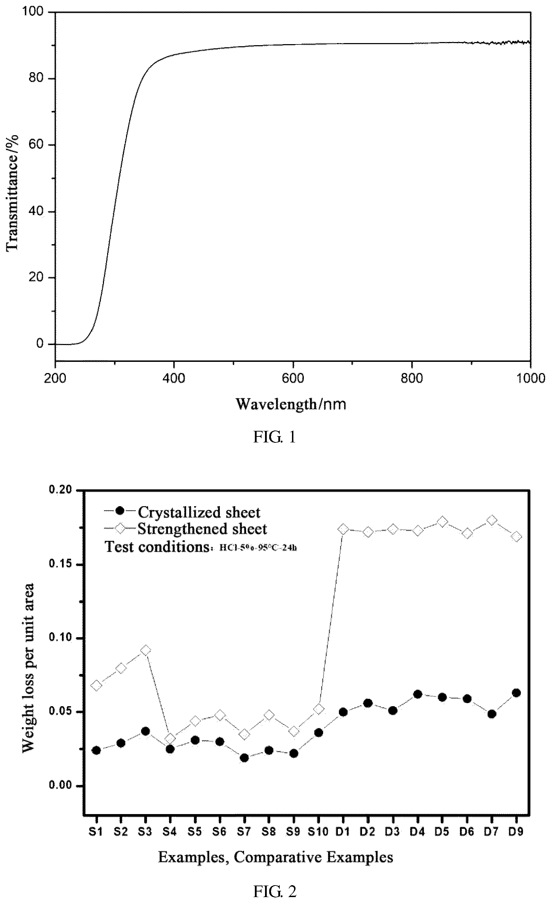

The present application also used Shimadzu UV-2000 UV-visible spectrophotometer to test the transmittance of the crystallized sheet under the wavelength light from 200 nm to 1000 nm, which is shown in FIG. 1. As shown in the figure, in the visible wavelengths, the transmittance of the crystallized sheet is high and the transparency is good.

The crystallized sheet was tested for acid and alkali resistance according to the conditions shown in Table 2-1. The mass of the glass sample before and after the acid and alkali resistance test was weighed using an analytical balance (Shimadzu ATY124), and the weight loss per unit area was calculated, from which the acid and alkali resistance of the glass sample was measured. Specifically, the mass of the glass samples before and after the acid and alkali resistance test were weighed using an analytical balance as $m_0$ and $m_1$, respectively, and the area of the glass samples was s, then the weight loss per unit area was $x=(m_0-m_1)/s$. Specifically, the crystallized glass samples obtained in Example S1 were tested for their acid and alkali resistance by immersing them in three acid and alkali conditions as follows, respectively: 1) in a hydrochloric acid solution with a mass concentration of 5% and left standing therein at 95°C for 24 h (abbreviated as "HCl-5%-95°C-24h"); 2) in a hydrofluoric acid solution with a mass concentration of 10% and left standing therein at 20°C for 20 min (abbreviated as "HF-10%-20°C-20 min"); 3) in a sodium hydroxide solution with a mass concentration of 5% and left standing therein at 95°C for 6 h (abbreviated as "NaOH-5%-95°C-6 h"); test results are summarized in Table 2-1.

(1) Chemical strengthening treatment: the above crystallized sheet was subjected to chemical strengthening treatment according to the conditions in Table 3-1. The crystallized glass-ceramic sheet obtained in Example S1 was put in a high temperature salt bath at 480°C. The salt bath composed of a mixed salt bath containing 70 wt% $NaNO_3$ and 30 wt% $KNO_3$ was used for a primary ion-exchange, in which lithium nitrate was also added in the mixed salt bath in an amount of 0.03 wt% relative to the total weight of the mixed salt bath to introduce lithium ions. A specific ion exchange time of 540 min was carried out to obtain a strengthened glass-ceramic (referred to as a "strengthened sheet") after the ion exchange (i.e., after the chemical strengthening treatment), i.e., the target glass-ceramic article of the present application.

The same method and conditions as in step (3) were used to test the acid and alkali resistance of the strengthened glass under three kinds of acid and alkali conditions, and the test results are summarized in Table 2-2, and the strengthened glass was subjected to stress performance tests by the stress tester SLP-2000, which included the surface CS (MPa), the absolute value of the average tensile stress ICT - AVI (MPa), the depth of compressive stress layer DOL_0 ($\mu$m) and tensile stress linear density CT_LD (MPa/mm) were tested and/or calculated, and the test results are summarized in Table 3-1.

The base glass, glass-ceramic brick, crystallized sheet and strengthened sheet of Examples S2-S10 and Comparative Examples D1-D9 were prepared with reference to a method similar to that of Example S1, and the relevant tests were completed.

The light transmittance, crystalline phase test results and acid and alkali resistance test results of the crystallized sheet, and the acid and alkali resistance test and various stress performance test results of the strengthened sheet are detailed in Tables 1-1, 1-2, 2-1, 2-2 and 3-1, respectively.

Table 1-1 Glass formulations of Examples S1-S10 and performance test results of crystallized sheets of Examples S1-S10

| Composition /mol% | S1 | S2 | S3 | S4 | S5 | S6 | S7 | S8 | S9 | S10 |
|---|---|---|---|---|---|---|---|---|---|---|
| $SiO_2$ | 69.2 | 67.4 | 68.9 | 69.5 | 68.4 | 70.4 | 68.5 | 69.5 | 68.4 | 68.3 |
| $Al_2O_3$ | 4.1 | 4.2 | 4.0 | 4.3 | 3.9 | 3.8 | 4.2 | 4.1 | 4.2 | 4.2 |
| $P_2O_5$ | 1.1 | 1.2 | 1.0 | 1.2 | 1.2 | 1.3 | 1.2 | 1.4 | 1.3 | 1.1 |
| $ZrO_2$ | 2.6 | 3.0 | 2.7 | 2.5 | 2.7 | 2.5 | 2.6 | 2.7 | 2.8 | 2.6 |
| $Na_2O$ | 0.3 | 0.1 | 0.1 | 0.1 | 0.4 | 0.3 | 0.3 | 0.3 | 0.8 | 0.3 |
| $K_2O$ | 0.1 | 0.2 | 0.1 | 0.1 | 0.3 | 0.1 | 0.1 | 0.1 | 0.1 | 0.1 |
| $Li_2O$ | 21.5 | 23.0 | 21.6 | 21.2 | 21.0 | 20.5 | 21.3 | 21.0 | 20.6 | 22.5 |
| $CaO$ | 0.8 | 0.8 | 0.8 | 1.0 | 1.0 | 0.6 | 1.5 | 0.6 | 0.9 | 0.8 |
| $B_2O_3$ | 0.3 | 0.1 | 0.3 | 0.1 | 0.3 | 0.5 | 0.3 | 0.3 | 0.4 | 0.1 |
| $MgO$ | 0 | 0 | 0 | 0 | 0.8 | 0 | 0 | 0 | 0.2 | 0 |
| $BaO$ | 0 | 0 | 0.5 | 0 | 0 | 0 | 0 | 0 | 0.3 | 0 |
| Base glass appearance | Transparent | Transparent | Transparent | Transparent | Transparent | Transparent | Transparent | Transparent | Transparent | Transparent |
| Nucleation temperature °C/Time min | 545/24 0 | 560/24 0 | 545/24 0 | 555/24 0 | 545/24 0 | 535/240 | 540/240 | 540/24 0 | 535/24 0 | 545/24 0 |
| Crystallization temperature °C/Time min | 675/90 | 700/90 | 670/24 0 | 685/90 | 675/90 | 675/180 | 670/90 | 655/90 | 665/90 | 695/90 |
| Heat treatment heating rate/ (°C/min) | 10 | 10 | 10 | 10 | 10 | 10 | 10 | 10 | 10 | 10 |
| b-value | 0.46 | 0.70 | 0.63 | 0.53 | 0.69 | 0.77 | 0.69 | 0.50 | 0.58 | 0.62 |
| 550nm Transmittance/% | 91.54 | 90.88 | 90.97 | 91.04 | 90.83 | 90.70 | 91.45 | 91.28 | 91.10 | 90.97 |
| Crystalline phase | $Li_2Si_2O_5$, $LiAlSi_4O_{10}$ | $Li_2Si_2O_5$, $LiAlSi_4O_{10}$ | $Li_2Si_2O_5$, $LiAlSi_4O_{10}$ | $Li_2Si_2O_5$, $LiAlSi_4O_{10}$ | $Li_2Si_2O_5$, $LiAlSi_4O_{10}$ | $Li_2SiO_3$ $Li_2Si_2O_5$, $LiAlSi_4O_{10}$ | $Li_2Si_2O_5$ $LiAlSi_4O_{10}$ | $Li_2Si_2O_5$, $LiAlSi_4O_{10}$ | $Li_2Si_2O_5$, $LiAlSi_4O_{10}$ | $Li_2Si_2O_5$, $LiAlSi_4O_{10}$ |

(continued)

| Composition /mol% | S1 | S2 | S3 | S4 | S5 | S6 | S7 | S8 | S9 | S10 |
|---|---|---|---|---|---|---|---|---|---|---|
| Crystal content /wt% | 89.33 | 92.49 | 87.29 | 95.28 | 87.17 | 90.18 | 88.89 | 88.08 | 91.09 | 92.45 |
| Average size of crystal grains /nm | 22.1 | 19.8 | 20.2 | 14.7 | 16.9 | 20.0 | 15.1 | 10.2 | 14.5 | 25.4 |

Table 1-2 Glass formulations of Comparative Examples D1-D9 and performance test results of crystallized sheets of Comparative Examples D1-D9

| Composition /mol% | D1 | D2 | D3 | D4 | D5 | D6 | D7 | D8 | D9 |
|---|---|---|---|---|---|---|---|---|---|
| $SiO_2$ | 69.1 | 70.3 | 70.8 | 69.3 | 69.5 | 67.2 | 68.7 | 68.4 | 67.3 |
| $Al_2O_3$ | 4.2 | 5.8 | 4.5 | 5.0 | 4.2 | 4.7 | 4.6 | 4.0 | 4.3 |
| $P_2O_5$ | 0.9 | 0.6 | 0.8 | 1.0 | 0.8 | 0.6 | 2.5 | 0.8 | 0.7 |
| $ZrO_2$ | 1.8 | 1.8 | 2.5 | 2.5 | 2.0 | 1.0 | 1.3 | 3.7 | 2.6 |
| $Na_2O$ | 1.4 | 4.0 | 0.9 | 1.5 | 3.2 | 1.7 | 0.3 | 1.5 | 1.6 |
| $K_2O$ | 0 | 0 | 0.2 | 0.2 | 0 | 0.3 | 0 | 0 | 0 |
| $Li_2O$ | 21.1 | 16.5 | 20.0 | 20.5 | 20.0 | 21.5 | 21.1 | 21.6 | 21.1 |
| CaO | 0 | 0 | 0 | 0 | 0.3 | 0 | 0 | 0 | 1.9 |
| $B_2O_3$ | 1.5 | 1.0 | 0.3 | 0 | 0 | 3.0 | 1.5 | 0 | 0.5 |
| MgO | 0 | 0 | 0 | 0 | 0 | 0 | 0 | 0 | 0 |
| BaO | 0 | 0 | 0 | 0 | 0 | 0 | 0 | 0 | 0 |
| Base glass appearance | Transparent | Transparent | Slight devitrification of a tiny fraction | Transparent | Transparent | Transparent | Transparent | Slight devitrification | Transparent |
| Nucleation temperature °C/Time min | 540/240 | 535/240 | 565/24 0 | 550/240 | 575/240 | 550/240 | 565/90 | 556/240 | 545/240 |
| Crystallization temperature °C/Time min | 640/240 | 665/90 | 650/90 | 665/180 | 670/90 | 625/90 | 680/90 | 690/90 | 635/90 |
| Heat treatment heating rate/ (°C/ min) | 10 | 10 | 10 | 10 | 10 | 10 | 10 | 10 | 10 |
| b-value | 0.54 | 0.60 | 0.98 | 0.82 | 0.59 | 0.97 | 0.50 | (Devitrification after heat treatment) | 1.05 |
| 550nm Transmittance /% | 91.24 | 90.45 | 90.02 | 90.79 | 90.97 | 90.25 | 90.62 | | 90.13 |
| Crystalline phase | $Li_2Si_2O_5$, $LiAlSi_4O_{10}$, $LiAlSi_2O_6$ | $Li_2Si_2O_5$, $LiAlSi_4O_{10}$ | $Li_2Si_2O_5$, $LiAlSi_4O_{10}$, $SiO_2$ | $Li_2SiO_3$, $Li_2Si_2O_5$, $LiAlSi_4O_{10}$ | $Li_2Si_2O_5$, $LiAlSi_4O_{10}$ $LiAlSi_2O_6$ | $Li_2Si_2O_5$ $LiAlSi_4O_{10}$ | $Li_2Si_2O_5$, $LiAlSi_4O_{10}$ | $Li_2Si_2O_5$, $LiAlSi_4O_{10}$, $ZrO_2$ | $Li_2Si_2O_5$, $LiAlSi_4O_{10}$ |

| Composition /mol% | D1 | D2 | D3 | D4 | D5 | D6 | D7 | D8 | D9 |
|---|---|---|---|---|---|---|---|---|---|
| Crystal content /wt% | 78.25 | 82.30 | / | 78.54 | 62.80 | 79.14 | 81.65 | / | 80.23 |
| Average size of crystal grains /nm | 21.4 | 19.2 | / | 29.5 | 7.1 | 11.0 | 19.4 | / | 27.8 |

Table 2-1 Acid and alkali resistance test results of the crystallized sheets obtained in Examples S1-S10 and Comparative Examples D1-D9

| Serial number of example or comparative example | Weight loss per unit area (Conditions: reagent - concentration - temperature - duration) / (Unit: $g/cm^2$) | | |
|---|---|---|---|
| | HCl-5%-95°C-24h | HF-10%-20°C-20min | NaOH-5%-95°C-6h |
| S1 | 0.024 | 6.924 | 0.188 |
| S2 | 0.029 | 7.200 | 0.178 |
| S3 | 0.037 | 7.103 | 0.191 |
| S4 | 0.025 | 6.544 | 0.128 |
| S5 | 0.031 | 6.980 | 0.119 |
| S6 | 0.030 | 7.220 | 0.134 |
| S7 | 0.019 | 6.510 | 0.148 |
| S8 | 0.024 | 6.780 | 0.157 |
| S9 | 0.022 | 5.960 | 0.129 |
| S10 | 0.036 | 7.102 | 0.146 |
| D1 | 0.050 | 8.480 | 0.220 |
| D2 | 0.056 | 8.240 | 0.203 |
| D3 | 0.051 | 8.532 | 0.265 |
| D4 | 0.062 | 8.470 | 0.357 |
| D5 | 0.060 | 8.491 | 0.240 |
| D6 | 0.059 | 8.624 | 0.300 |
| D7 | 0.0487 | 8.506 | 0.280 |
| D9 | 0.063 | 8.600 | 0.264 |

Table 2-2 Acid and alkali resistance test results of the strengthened sheets obtained in Examples S1-S10 and Comparative Examples D1-D9

| Serial number of example or comparative example | Weight loss per unit area (Conditions: reagent - concentration - temperature - duration) / ($g/cm^2$) | | |
|---|---|---|---|
| | HCl-5%-95°C-24h | HF-10%-20°C-20min | NaOH-5%-95°C-6h |
| S1 | 0.068 | 8.150 | 0.192 |
| S2 | 0.080 | 7.866 | 0.210 |
| S3 | 0.092 | 7.784 | 0.246 |
| S4 | 0.032 | 7.776 | 0.186 |
| S5 | 0.044 | 8.095 | 0.128 |
| S6 | 0.048 | 7.970 | 0.154 |
| S7 | 0.035 | 7.414 | 0.172 |
| S8 | 0.048 | 7.622 | 0.182 |
| S9 | 0.037 | 7.540 | 0.148 |
| S10 | 0.052 | 7.835 | 0.153 |
| D1 | 0.174 | 9.626 | 0.398 |
| D2 | 0.172 | 9.631 | 0.458 |

(continued)

| Serial number of example or comparative example | Weight loss per unit area (Conditions: reagent - concentration - temperature - duration) / (g/cm$^2$) | | |
| --- | --- | --- | --- |
| | HCI-5%-95°C-24h | HF-10%-20°C-20min | NaOH-5%-95°C-6h |
| D3 | 0.174 | 9.576 | 0.430 |
| D4 | 0.173 | 9.482 | 0.487 |
| D5 | 0.179 | 9.465 | 0.362 |
| D6 | 0.171 | 9.780 | 0.401 |
| D7 | 0.180 | 9.153 | 0.454 |
| D9 | 0.169 | 9.200 | 0.496 |

Table 3-1 Strengthening conditions and test results of surface stress after strengthening of the glass-ceramics obtained in Examples and Comparative Examples

| Serial number of example or comparative example | S1 | S2 | S3 | S4 | S7 | S9 | D1 | D2 | D5 |
|---|---|---|---|---|---|---|---|---|---|
| Mixed salt bath NaNO$_3$/wt % | 70 | 70 | 70 | 70 | 70 | 70 | 70 | 70 | 70 |
| KNO$_3$/wt% | 30 | 30 | 30 | 30 | 30 | 30 | 30 | 30 | 30 |
| LiNO$_3$/wt% (Adding proportion relative to mixed salt bath) | 0.03 | 0.03 | 0.03 | 0.03 | 0.03 | 0.03 | 0.03 | 0.03 | 0.03 |
| Salt bath temperature /°C | 480 | 480 | 480 | 480 | 480 | 480 | 480 | 480 | 480 |
| Salt bath time /min | 540 | 480 | 540 | 540 | 480 | 480 | 600 | 540 | 540 |
| Surface CS/MPa | 367.8 0 | 427.9 2 | 394.4 9 | 385.53 | 452.9 0 | 362.62 | 339.49 | 197.9 5 | 241.6 4 |
| \|CT_AV\|/M Pa | 99.19 | 101.1 9 | 105.5 6 | 86.47 | 105.9 2 | 91.92 | 61.15 | 48.73 | 58.12 |
| DOL_0/ $\mu$m | 148.2 5 | 139.9 7 | 144.9 3 | 130.48 | 140.7 0 | 140.03 | 122.09 | 135.0 1 | 138.6 9 |
| CT_LD/ (MPa/mm ) | 57173 .39 | 60721 .12 | 61850 .09 | 54232. 79 | 63320 .00 | 55140. 41 | 39814 | 29930 .50 | 35067 .80 |

As can be seen from the test results of Examples S1-S10 and Comparative Examples D1-D9 above:

1. The sample sheet of the glass-ceramic which have only been treated with crystallization (i.e., the crystallized sheet) exhibit better acid and alkali resistance than the glass-ceramic which has been treated with chemical strengthening (i.e., the strengthened sheet).

2. The Examples have improved the acid and alkali resistance of the glass-ceramic as a whole by adjusting the oxide components and controlling the content relationship between the oxides. Taking S1 and D1 as examples, the effect of the improved acid and alkali resistance of their crystallized sheets was tested. Resistant to hydrochloric acid corrosion, 95°C, 24 hours, the unit weight loss rate of S1 is reduced by about 52% compared with that of D1 (the calculation here is: (weight loss rate of D1 - weight loss rate of S1)/weight loss rate of D1, multiplied by 100%, and the following calculation method is the same); resistant to hydrofluoric acid corrosion, 20°C, 20 minutes, the unit weight loss rate of S1 is reduced by about 18.3% compared with that of D1; resistant to sodium hydroxide alkali corrosion, 95°C, 6 hours, the unit weight loss rate of S1 is reduced by about 14.5% compared with that of D1.

3. The strengthened glass-ceramic (i.e. strengthened sheet) are compared. Taking S1 and D1 for example, the acid and alkali resistance enhancement effect of the strengthened sheet were tested: resistant to hydrochloric acid corrosion, 95°C, 24 hours, the unit weight loss rate of S1 is reduced by about 60.9% compared with that of D1; resistant to hydrofluoric acid corrosion, 20°C, 20 minutes, the unit weight loss rate of S1 is reduced by about 15.3% compared with that of D1; resistant to sodium hydroxide alkali corrosion, 95°C, 6 hours, the unit weight loss rate of S1 is reduced by about 51.8% compared with that of D1.

The present application thus provides a glass-ceramic having excellent acid and alkali resistance.

By testing the stress performance of the strengthened sheet made in the examples through SLP-2000, it can be known that: the surface CS of the strengthened sheet made in the examples can reach about 453 MPa, |CT_AV| can reach about 106 MPa, and it is calculated that the tensile stress linear density CT_LD of the examples can reach 50,000 MPa/mm to 64,000 MPa/mm.

**Claims**

1. An acid and alkali resistant glass-ceramic comprising the following components in molar percentage based on the total number of moles of the components of the glass-ceramic:

$$67.0\% \leq SiO_2 \leq 71.0\%;$$

$$3.5\% \leq Al_2O_3 \leq 4.5\%;$$

$$0.7\% \leq P_2O_5 \leq 1.5\%;$$

$$1.5\% \leq ZrO_2 \leq 4.0\%;$$

$$0\% < Na_2O \leq 1.0\%;$$

$$0\% < K_2O \leq 0.5\%;$$

$$20.0\% \leq Li_2O \leq 23.0\%;$$

$$0\% < CaO \leq 1.8\%;$$

$$0\% < B_2O_3 \leq 0.7\%;$$

$$0\% \leq MgO \leq 1.0\%;$$

and

$$0\% \leq BaO \leq 0.8\%.$$

2. The glass-ceramic according to claim 1, wherein the component content of the glass-ceramic satisfies the following conditions:

$10 \geq (Na_2O + K_2O + Li_2O)/ZrO_2 \geq 0.2$, preferably $10 \geq (Na_2O + K_2O + Li_2O)/ZrO_2 \geq 5$; and/or
$CaO + BaO + MgO \geq 1.5 \times (Na_2O + K_2O)$; and/or
$ZrO_2 + P_2O_5 \geq 7.6 \times B_2O_3$.

3. The glass-ceramic according to claim 1 or 2, wherein, in molar percentage based on the total number of moles of the components of the glass-ceramic, $1.0\% \leq P_2O_5 \leq 1.5\%$, and/or $2.0\% \leq ZrO_2 \leq 3.0\%$, and/or $0\% < CaO \leq 1.5\%$.

4. The glass-ceramic according to any one of claims 1-3, wherein the glass-ceramic comprises the following components in molar percentage based on the total number of moles of the components of the glass-ceramic:

$$68.0\% \leq SiO_2 \leq 69.5\%;$$

$$3.8\% \leq Al_2O_3 \leq 4.3\%;$$

$$1.0\% \leq P_2O_5 \leq 1.5\%;$$

$$2.5\% \leq ZrO_2 \leq 3.0\%;$$

$$0.1\% \leq Na_2O \leq 1.0\%;$$

$$0.1\% \leq K_2O \leq 0.3\%;$$

$$20.5\% \leq Li_2O \leq 21.5\%;$$

$$0.5\% \leq CaO \leq 1.5\%;$$

$$0.1\% \leq B_2O_3 \leq 0.4\%;$$

$$0\% \leq MgO \leq 1.0\%;$$

and

$$0\% \leq BaO \leq 0.8\%.$$

5. The glass-ceramic according to any one of claims 1 to 4, wherein, in molar percentage based on the total number of moles of the components of the glass-ceramic, in the glass-ceramic:

$SiO_2/(Li_2O + Al_2O_3)$ has a value of 2.5 to 3.0; and/or
$(CaO + BaO + MgO)/ZrO_2$ has a value of 0.2 to 0.7.

6. The glass-ceramic according to any one of claims 1 to 5, wherein the glass-ceramic comprises a crystal phase, and a main crystalline phase of the crystal phase is a lithium disilicate crystalline phase and a petalite crystalline phase.

7. The glass-ceramic according to claim 6, wherein the crystal phase constitutes at least 80.00 wt% of the glass-ceramic.

8. The glass-ceramic according to claim 6 or 7, wherein, in the glass-ceramic, an average size of crystal grains is 10 nm to 50 nm.

9. The glass-ceramic according to any one of claims 1 to 8, wherein, at a thickness of 0.7 mm, the glass-ceramic is transparent and has a transmittance of not less than 90.00% for light at a wavelength of 550 nm.

10. The glass-ceramic according to any one of claims 1 to 9, wherein an unstrengthened glass-ceramic is used to put in:

    a hydrochloric acid solution with a mass concentration of 5% and left standing therein at 95°C for 24 h, and the glass-ceramic has a weight loss rate per unit area x1, x1<0.050 g/cm$^2$; and/or
    a hydrofluoric acid solution with a mass concentration of 10% and left standing therein at 20°C for 20 min, and the glass-ceramic has a weight loss rate per unit area x2, x2≤8.00 g/cm$^2$; and/or,
    a sodium hydroxide solution with a mass concentration of 5% and left standing therein at 95°C for 6 h, and the glass-ceramic has a weight loss rate per unit area x3, x3≤0.20 g/cm$^2$.

11. The glass-ceramic according to any one of claims 1 to 10, wherein the glass-ceramic comprises a compressive stress layer formed by ion exchange, and a depth of the compressive stress layer DOL_0 on any surface of the glass-ceramic is 15% to 25% of the thickness of the glass-ceramic.

12. The glass-ceramic according to claim 11, wherein the glass-ceramic has a tensile stress linear density CT_LD of 45,000 MPa/mm to 64,000 MPa/mm.

13. The glass-ceramic according to claim 11 or 12, wherein the glass-ceramic has a surface compressive stress of 350 MPa to 500 MPa.

14. The glass-ceramic according to any one of claims 11 to 13, wherein the glass-ceramic has a |CT_AV| of 80 MPa to 110 MPa.

15. The glass-ceramic according to any one of claims 11 to 14, wherein, left standing the glass-ceramic in a hydrochloric acid solution with a mass concentration of 5% at 95°C for 24 h, the glass-ceramic has a weight loss rate per unit area x4, x4<0.150 g/cm$^2$, preferably x4<0.100 g/cm$^2$; and/or

    left standing the glass-ceramic in a hydrofluoric acid solution with a mass concentration of 10% at 20°C for 20 min, the glass-ceramic has a weight loss rate per unit area x5, x5≤8.50 g/cm$^2$; and/or
    left standing the glass-ceramic in a sodium hydroxide solution with a mass concentration of 5% at 95°C for 6 h, the glass-ceramic has a weight loss rate per unit area x6, ×6≤0.25 g/cm$^2$.

16. A preparation method of a glass-ceramic, comprising the following steps:

    (1) preparation of a base glass: melting and molding a mixture of raw material substances and then annealing to obtain the base glass;
    (2) preparation of a glass-ceramic brick: heating the base glass obtained in step (1) sequentially for nucleation treatment and crystallization treatment to obtain the glass-ceramic brick; and
    (3) cold processing: subjecting the glass-ceramic brick obtained in step (2) to cold processing treatment to obtain a sample sheet of the glass-ceramic as described in any one of claims 1 to 10.

17. The preparation method according to claim 16, further comprising the following steps:
    (4) subjecting the sample sheet of the glass-ceramic obtained in step (3) to chemical strengthening treatment to obtain a sample sheet of the glass-ceramic sample as described in any one of claims 11 to 15.

18. The preparation method according to claim 16 or 17, wherein, in step (1), a melting temperature is 1500°C to 1650°C; and an annealing temperature is 450°C to 550°C.

19. The preparation method according to any one of claims 16-18, wherein, in step (2), the nucleation treatment is carried out at 530°C to 565°C for 90 min to 240 min; and the crystallization treatment is carried out at 640°C to 700°C for 90 min to 240 min.

**20.** The preparation method according to any one of claims 16 to 19, wherein, in step (2), the crystallization treatment is a semi-crystallization treatment, and after the semi-crystallization treatment makes a crystallization degree of the base glass reach 1/3 to 4/5 of a complete crystallization degree, a 3D hot bending treatment is carried out to obtain the glass-ceramic brick; preferably, the 3D hot bending treatment is a hot bending treatment of three stages: preheating at a temperature of 450°C to 720°C, hot bending at a temperature of 720°C to 820°C, and cooling to room temperature.

**21.** The preparation method according to any one of claims 17 to 19, wherein, in step (4), the chemical strengthening treatment is carried out in a mixed salt bath comprising 30 wt% to 100 wt% of $NaNO_3$, preferably 30 wt% to 90wt% of $NaNO_3$ and/or 0 wt% to 70 wt% of $KNO_3$, preferably 10 wt% to 70 wt% of $KNO_3$, and $LiNO_3$ is added in a content of 0.01 wt% to 0.10 wt% relative to the total weight of the mixed salt bath.

**22.** The preparation method according to claim 17 or 21, wherein the chemical strengthening treatment is carried out with one or two or more ion exchanges such that the glass-ceramic has a tensile stress linear density CT_LD of 45,000 MPa/mm to 64,000 MPa/mm.

**23.** A glass-ceramic obtained by the preparation method according to any one of claims 16 to 22.

**24.** Use of the glass-ceramic according to any one of claims 1 to 15 or the glass-ceramic according to claim 23 as a display panel or a display screen in an intelligent electronic product.

**25.** Use of the glass-ceramic according to any one of claims 1 to 15 or the glass-ceramic according to claim 23 in a glass device.

FIG. 1

FIG. 2

FIG. 3

FIG. 4

## INTERNATIONAL SEARCH REPORT

| International application No. |
|---|
| **PCT/CN2023/106512** |

**A.    CLASSIFICATION OF SUBJECT MATTER**

C03C 10/12(2006.01)i;  C03B32/02(2006.01)i

According to International Patent Classification (IPC) or to both national classification and IPC

**B.    FIELDS SEARCHED**

Minimum documentation searched (classification system followed by classification symbols)

IPC：C03C C03B

Documentation searched other than minimum documentation to the extent that such documents are included in the fields searched

Electronic data base consulted during the international search (name of data base and, where practicable, search terms used)

CNTXT; CNKI; WPABS; VEN; WOTXT; EPTXT; USTXT; ISI_WEB OF SCIENCE: 重庆鑫景特种玻璃有限公司, 华为技术有限公司, 微晶玻璃, 结晶玻璃, 氧化硅, 氧化铝, 五氧化二磷, 氧化锆, 氧化锂, 二硅酸锂, 焦硅酸锂, 透锂长石, microcrystalline glass, crystalline glass, silicon oxide, aluminum oxide, phosphorus pentoxide, zirconium oxide, lithium oxide, SiO2, Al2O3, P2O5, ZrO2, Li2O, lithium disilicate, petalite

**C.    DOCUMENTS CONSIDERED TO BE RELEVANT**

| Category* | Citation of document, with indication, where appropriate, of the relevant passages | Relevant to claim No. |
|---|---|---|
| X | CN 113387586 A (CDGM GLASS CO., LTD.) 14 September 2021 (2021-09-14) description, paragraphs 0004-0105 | 1-25 |
| X | CN 111018356 A (SHENZHEN DONGLIHUA TECHNOLOGY CO., LTD.) 17 April 2020 (2020-04-17) description, paragraphs [0006]-[0030] | 1-25 |
| X | CN 111087174 A (SHENZHEN DONGLIHUA TECHNOLOGY CO., LTD.) 01 May 2020 (2020-05-01) claims 1-15 | 1-25 |
| X | CN 111635138 A (CHONGQING LIANGJIANG NEW DISTRICT XIAMEIXI SCIENCE AND TECHNOLOGY PARTNERSHIP ENTERPRISE (LIMITED PARTNERSHIP)) 08 September 2020 (2020-09-08) claims 1-16 | 1-25 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 October 2023** | **25 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/106512**

### C. DOCUMENTS CONSIDERED TO BE RELEVANT

| Category* | Citation of document, with indication, where appropriate, of the relevant passages | Relevant to claim No. |
|---|---|---|
| X | CN 110981206 A (SHENZHEN DONGLIHUA TECHNOLOGY CO., LTD.) 10 April 2020 (2020-04-10)<br>description, paragraphs [0025]-[0031] | 1-25 |
| X | CN 112608033 A (CHONGQING XINJING SPECIAL GLASS CO., LTD.) 06 April 2021 (2021-04-06)<br>claims 1-36 | 1-25 |
| X | CN 111867993 A (CORNING INC.) 30 October 2020 (2020-10-30)<br>description, paragraphs 0007-0039 | 1-25 |

Form PCT/ISA/210 (second sheet) (July 2022)

INTERNATIONAL SEARCH REPORT
Information on patent family members

International application No.

**PCT/CN2023/106512**

| Patent document cited in search report | | | Publication date (day/month/year) | Patent family member(s) | | | Publication date (day/month/year) |
|---|---|---|---|---|---|---|---|
| CN | 113387586 | A | 14 September 2021 | None | | | |
| CN | 111018356 | A | 17 April 2020 | WO | 2021135992 | A1 | 08 July 2021 |
| | | | | CN | 111018356 | B | 10 May 2022 |
| CN | 111087174 | A | 01 May 2020 | CN | 111087174 | B | 18 March 2022 |
| CN | 111635138 | A | 08 September 2020 | CN | 111635138 | B | 25 February 2022 |
| CN | 110981206 | A | 10 April 2020 | KR | 20220117309 | A | 23 August 2022 |
| | | | | WO | 2021121404 | A1 | 24 June 2021 |
| | | | | EP | 4079698 | A1 | 26 October 2022 |
| | | | | US | 2023031267 | A1 | 02 February 2023 |
| | | | | CN | 110981206 | B | 05 April 2022 |
| CN | 112608033 | A | 06 April 2021 | None | | | |
| CN | 111867993 | A | 30 October 2020 | TW | 202026267 | A | 16 July 2020 |
| | | | | JP | 7269252 | B2 | 08 May 2023 |
| | | | | EP | 3752470 | A2 | 23 December 2020 |
| | | | | TW | 202208303 | A | 01 March 2022 |
| | | | | TW | 202134198 | A | 16 September 2021 |
| | | | | KR | 20200139691 | A | 14 December 2020 |
| | | | | KR | 102511592 | B1 | 17 March 2023 |
| | | | | US | 2020148591 | A1 | 14 May 2020 |
| | | | | US | 11104608 | B2 | 31 August 2021 |
| | | | | WO | 2020102231 | A2 | 22 May 2020 |
| | | | | WO | 2020102231 | A3 | 30 July 2020 |
| | | | | KR | 20230041088 | A | 23 March 2023 |
| | | | | VN | 75391 | A | 25 January 2021 |
| | | | | TW | 725615 | B1 | 21 April 2021 |
| | | | | IN | 202017038871 | A | 14 May 2021 |
| | | | | TW | 746395 | B1 | 11 November 2021 |
| | | | | JP | 2022511158 | W | 31 January 2022 |
| | | | | TW | 781787 | B1 | 21 October 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210869861

- CN 201980020541